# EUROPÄISCHE PATENTSCHRIFT

(11) **EP 3 848 265 B1**
(45) Veröffentlichungstag und Bekanntmachung des Hinweises auf die Patenterteilung: **23.03.2022**
(21) Anmeldenummer: 20212203.2
(22) Anmeldetag: 07.12.2020
(51) Int. Cl.: B60W 40/068, B60W 30/18, B60W 10/02, B60W 10/08, B60W 10/11, B60K 6/48, B60W 10/113, B60W 50/00

(54) **VERFAHREN ZUM SCHUTZ VOR EINER ÜBERDREHZAHL EINER ELEKTRISCHEN MASCHINE IN EINEM KRAFTFAHRZEUGANTRIEBSSTRANG**
METHOD FOR PROTECTING AGAINST AN OVERSPEED OF AN ELECTRIC MACHINE IN A MOTOR VEHICLE DRIVE TRAIN
PROCÉDÉ DE PROTECTION CONTRE UNE SURVITESSE D'UNE MACHINE ÉLECTRIQUE DANS UNE CHAINE CINÉMATIQUE DE VÉHICULE AUTOMOBILE

(30) Priorität: 09.01.2020 DE 102020200161
(43) Veröffentlichungstag der Anmeldung: 14.07.2021
(73) Patentinhaber: Magna PT B.V. & Co. KG, 74199 Untergruppenbach (DE)
(72) Erfinder: CRUMP, Sebastian, 81549 München (DE)
(74) Vertreter: Zangger, Bernd

(56) Entgegenhaltungen:
- EP-A1- 2 899 086
- DE-A1-102008 003 206
- DE-A1-102015 115 852
- FR-A1- 3 071 798

## Beschreibung

### Gebiet der Erfindung

Die vorliegende Erfindung betrifft ein Verfahren zur Vermeidung von Überdrehzah-Ien einer elektrischen Maschine in einem Kraftfahrzeugantriebsstrang mit zumindest einer zumindest teilweise über die elektrische Maschine antreibbaren Achse, bei dem die elektrische Maschine von dem restlichen Antriebsstrang abgekoppelt werden kann.

### Stand der Technik

In der Kraftfahrzeugtechnik werden in vielen unterschiedlichen Bereichen elektrische Maschinen eingesetzt. Insbesondere im Bereich von Hybrid- und Elektrokraftfahrzeugen mit zumindest einer elektrischen Maschine als Antriebseinheit und zumindest einer angetriebenen Achse ist es notwendig die elektrische Maschine vor Überlasten, wie beispielsweise einer Überdrehzahl zu schützen, wenn diese mit verschiedenen Übersetzungen in den Antriebstrang eingebunden werden kann. So muss zu einer maximalen Drehzahl einer elektrischen Maschine, die antriebswirksam mit einer angetriebenen Achse des Kraftfahrzeugs verbunden bzw. verbindbar ist, jederzeit ein Puffer-Drehzahlbereich gehalten werden, um bei einem möglichen Radabriss eine Überdrehzahl durch die zweite Momentenquelle der elektrischen Maschine zu vermeiden. In der Regel geschieht die Einstellung dieses Puffer-Drehzahlbereichs über die Betrachtung des maximal möglichen Raddrehzahlgradienten für den schlimmsten Fall, nämlich, dass das Kraftfahrzeug auf blankem Eis unterwegs ist und so der Fahrbahn-Reibwert gleich Null ist. Dies schränkt die Effizienz der elektrischen Maschine stark ein, da aufgrund der hohen möglichen Drehzahlen ein entsprechend großer Luftspalt zwischen einem Rotor der elektrischen Maschine und einem Stator der elektrischen Maschine gehalten werden muss.

Ein Verfahren zum Schutz vor einer Überdrehzahl einer elektrischen Maschine in einem Hybridkraftfahrzeugantriebsstrang ist beispielsweise aus FR 3 071 798 A1 bekannt. Die Patentschriften DE 10 2015 115852 A1, DE 10 2008 003206 A1 und EP 2 899 086 A1 betreffen die Schätzung eines Kraftfahrzeuggewichts und einer Achslastverteilung bzw. die Berechnung einer Achslast bzw. die Schätzung eines Fahrbahn-Reibwerts.

### Zusammenfassung der Erfindung

Es ist eine Aufgabe der Erfindung ein Verfahren anzugeben, das die Möglichkeit bietet in Abhängigkeit des Fahrbahn-Reibwerts eine Abkoppelung einer elektrischen Maschine dynamisch zu treffen, um so bei einem minimalen Luftspalt zwischen einem Rotor und einem Stator der elektrischen Maschine den Drehzahlbereich bestmöglich ausnutzen zu können, was wiederum dazu führt, dass die elektrische Maschine in einem effizienteren Bereich betrieben werden kann, ohne Gefahr zu laufen die elektrische Maschine Überdrehzahlen auszusetzen.

Dieser Bedarf kann durch ein Verfahren gemäß dem unabhängigen ersten Anspruch gedeckt werden.

Das erfindungsgemäße Verfahren dient dem Schutz vor einer Überdrehzahl einer elektrischen Maschine mit minimal ausgelegtem Luftspalt in einem Kraftfahrzeugantriebsstrang in Parallelhybrid-Bauweise, beispielsweise in einer P2,5 oder P3-Ausführung. Der Kraftfahrzeugantriebsstrang weist zumindest eine, zumindest teilweise verfügbare elektrische Maschine auf, die aufgrund einer zweiten Momentenquelle, wie beispielsweise einer Verbrennungskraftmaschine, welche über eine andere Übersetzung als die elektrische Maschine mit dem Antriebsstrang antriebswirksam verbunden oder verbindbar ist, über den zulässigen Drehzahlbereich hinaus beschleunigt werden kann.

Entsprechend der vorliegenden Erfindung umfasst das Verfahren die folgenden Schritte:
- Schätzung eines Kraftfahrzeuggewichts während einem Anfahrvorgang,
- Laufende, also permanente, Berechnung einer dynamischen Achslast einer angetriebenen Achse des Kraftfahrzeugs, eines antreibenden Radmoments und eines Bedarfsreibwerts,
- Detektion eines Radabrisses durch Überwachung eines Mikro-Schlupfs zwischen einer antreibenden und einer nicht angetriebenen Achse des Kraftfahrzeugs,
- Schätzung eines aktuellen Fahrbahn-Reibwerts basierend auf dem bei Radabriss berechneten antreibenden Radmoment und der bei Radabriss berechneten dynamischen Achslast der angetriebenen Achse,
- Halten des geschätzten Fahrbahn-Reibwerts bis der Radabriss nicht mehr detektiert wird und gleichzeitige
- Ermittlung einer maximalen Drehzahl der elektrischen Maschine, bei der diese vom Antriebsstrang antriebswirksam abgekoppelt wird, basierend auf dem ermittelten Fahrbahn-Reibwert und der vorherrschenden Last der Verbrennungskraftmaschine.

Die Abkopplung der elektrischen Maschine kann beispielsweise über eine eigenständige Koppeleinheit oder das Auslegen eines Gangs in einem der elektrischen Maschine zugeordneten Getriebe erfolgen.

Unter einem Radabriss kann eine Situation verstanden werden, in der die Radhaftung abreißt und das Rad bzw. die Räder des Kraftfahrzeugs nicht mehr die nötige Traktion bereitstellen und durchdrehen.

Durch das erfindungsgemäße Verfahren ist beispielsweise eine größere Variabilität in der Gang-Vorwahlstrategie bezogen auf die elektrische Maschine erzielbar, da eine statische Drehzahlschwelle zur Vermeidung von Überdrehzahlen entfällt. Weiterhin wird die Verfügbarkeit der elektrischen Maschine bei hohen Drehzahlen erhöht und so deren Effizienz gesteigert.

### Kurzbeschreibung der Zeichnungen

Die Erfindung wird im Folgenden beispielhaft unter Bezugnahme auf die Zeichnungen beschrieben.
- Fig. 1: zeigt ein Diagramm, das den nutzbaren und den potentiell nutzbaren Drehzahlbereich einer elektrischen Maschine in einem Kraftfahrzeugantriebsstrang veranschaulicht, unter der Annahme, dass die elektrische Maschine im Fall eines Radabrisses (µ=0) über eine noch angekoppelte Verbrennungskraftmaschine weiter beschleunigt wird.
- Fig. 2: zeigt ein Diagramm, welches veranschaulicht, welcher Drehzahlbereich zusätzlich nutzbar wird, wenn von der Annahme µ=0 im Falle eines Radabrisses abgewichen werden kann, sofern ein Fahrbahn-Reibwert bekannt ist.
- Fig. 3: zeigt schematisch eine Anordnung einer elektrischen Maschine in einem P2,5-Parallelhybrid-Kraftfahrzeugantriebsstrang.
- Fig. 4: zeigt schematisch eine Anordnung einer elektrischen Maschine in einem P3-Parallelhybrid-Kraftfahrzeugantriebsstrang mit einer separaten, variablen Übersetzung zur elektrischen Maschine.
- Fig. 5: zeigt ein Diagramm, das einen kritischen Pfad einer angekoppelten elektrischen Maschine am Beispiel einer P2,5-Parallelhybrid-Anordnung verdeutlicht.
- Fig. 6: zeigt qualitativ eine Anpassung einer Abkoppeldrehzahl einer elektrischen Maschine bezogen auf einen geschätzten Fahrbahn-Reibwert und einer Last einer Verbrennungskraftmaschine.
- Fig. 7: zeigt einen Messausschnitt einer Kraftfahrzeugmessung auf bewässerten Glasbausteinen mit Absenkung der Grenz-Drehzahl einer elektrischen Maschine.
- Fig. 8: zeigt einen Messausschnitt nach einem detektierten Radabriss mit einer anschließenden Steigerung eines Bedarf-Reibwerts ohne einen Radabriss.

### Detaillierte Beschreibung der Erfindung

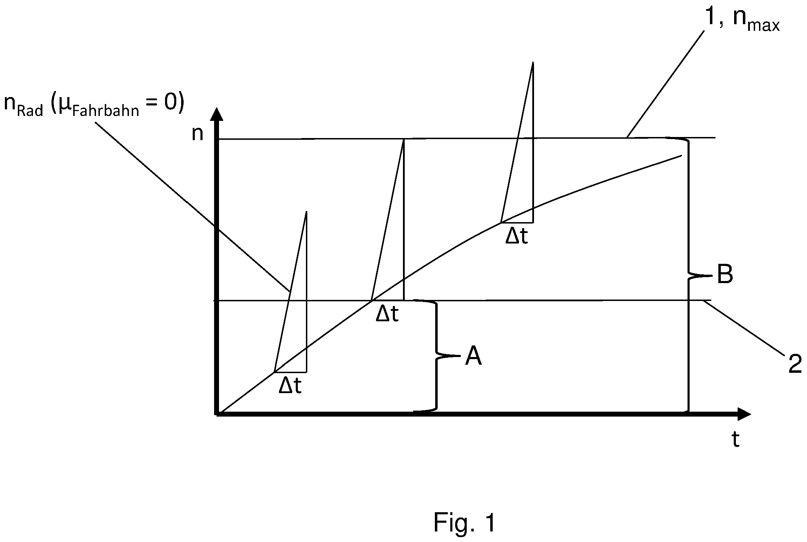

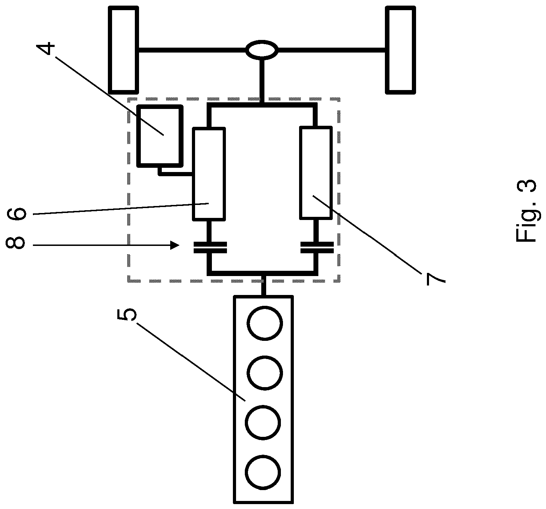

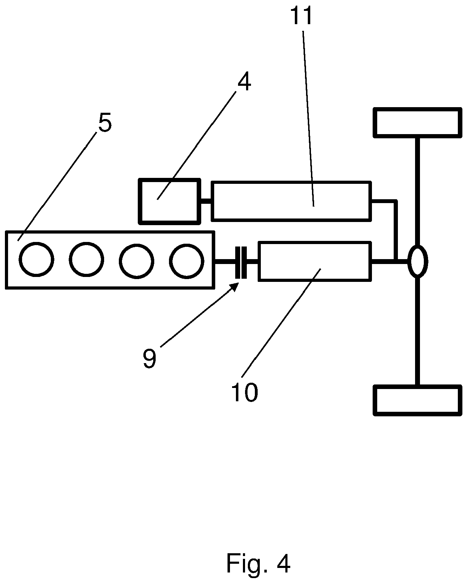

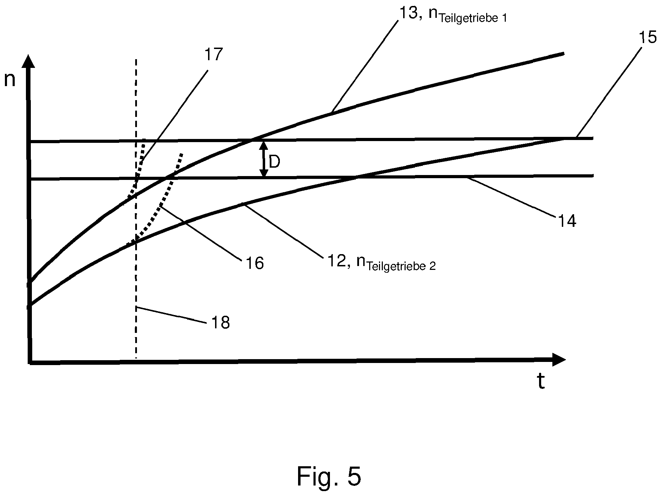

In dem in Fig. 1 dargestellten Diagramm wird ein Abkoppelansatz bzw. Ankoppelansatz einer elektrischen Maschine 4 in einem P2,5 -Parallelhybrid-Kraftfahrzeugantriebsstrang (Fig. 3) oder einem P3-Parallelhybrid-Kraftfahrzeugantriebsstrang (Fig. 4) gemäß dem Stand der Technik verdeutlicht. Aufgrund der prinzipbedingten Anordnung in einer P2,5-Anordnung oder einer P3-Anordnung mit verschiedenen Gangstufen für die elektrische Maschine 4 muss immer ein ausreichend großer Drehzahl-Puffer gehalten werden, um im Falle einer ungünstigen Übersetzungskombination, nämlich wenn eine zweite Momentenquelle, nämlich eine Verbrennungskraftmaschine 5, mit einer kleineren Übersetzung an die Achse angebunden ist als die elektrische Maschine 4, um bei einem Radabriss einer Zerstörung der elektrischen Maschine 4 vorzubeugen (Fig. 5).

In Fig. 3 und Fig. 4 sind schematisch unterschiedliche Parallelhybrid-Kraftfahrzeugantriebsstränge, nämlich eine P2,5-Anordnung und eine P3-Anordnung, dargestellt. In Fig. 3 ist schematisch der P2,5-Parallelhybrid-Kraftfahrzeugantriebsstrang dargestellt. Die Verbrennungskraftmaschine 5 ist hierbei über eine Doppelkupplung 8 wahlweise mit einem ersten Teilgetriebe 6 oder einem zweiten Teilgetriebe 7 antriebswirksam verbindbar. Die elektrische Maschine 4 ist hier antriebswirksam mit dem ersten Teilgetriebe 6 verbindbar. In Fig. 4 ist schematisch der P3-Parallelhybrid-Kraftfahrzeugantriebsstrang dargestellt. Die Verbrennungskraftmaschine 5 ist hierbei über eine Kupplung 9 mit einem Hauptgetriebe 10 antriebswirksam verbindbar. Bei einer P3-Anordnung sitzt die elektrische Maschine 4 am Getriebeausgang des Hauptgetriebes 10. Die elektrische Maschine 4 ist über ein weiteres Getriebe 11 antriebswirksam mit dem Getriebeausgang des Hauptgetriebes 10 verbindbar.

Fig. 5 zeigt ein Diagramm, das einen kritischen Pfad einer angekoppelten elektrischen Maschine 4 am Beispiel einer P2,5-Parallelhybrid-Anordnung gemäß Fig. 3 verdeutlicht.

In dem in Fig. 5 dargestellten Diagramm ist auf der Abszisse die Zeit t und auf der Ordinate die Drehzahl n aufgetragen. Die in durchgezogener Linienführung dargestellten Kennlinien, nämlich eine erste Kennlinie 12 und eine zweite Kennlinie 13, zeigen jeweils das Verhalten der Drehzahl n_{Teilgetriebe 1}, n_{Teilgetriebe 2} des jeweiligen Teilgetriebes 6, 7 über die Zeit t. Die in unterbrochener Linienführung dargestellten Kennlinien, nämlich eine dritte Kennlinie 16 und eine vierte Kennlinie 17, zeigen jeweils das Verhalten der Drehzahl n_{Teilgetriebe 1}, n_{Teilgetriebe 2} des jeweiligen Teilgetriebes 6, 7 über die Zeit t bei einem Radabriss.

In dem Diagramm sind weiterhin zwei waagrechte, durchgezogene Linien, nämlich eine vierte Linie 14 und eine fünfte Linie 15, eingezeichnet. Die vierte Linie 14 kennzeichnet eine maximale Drehzahl nₘₐₓ der elektrischen Maschine 4 normiert auf eine Eingangswelle des ersten Teilgetriebes 6. Die fünfte Linie 15 kennzeichnet eine maximale Drehzahl nₘₐₓ der Verbrennungskraftmaschine 5 normiert auf eine Eingangswelle des zweiten Teilgetriebes 7.

Die Drehzahldifferenz D zwischen der vierten Linie 14 und der fünften Linie 15 ergibt sich aufgrund der gewählten Übersetzung zwischen der elektrischen Maschine 4 und der Verbrennungskraftmaschine 5. Ein Überschreiten der Drehzahl der elektrischen Maschine 4 gemäß der vierten Linie 14 im Fall eines Radabrisses führt zur Zerstörung der elektrischen Maschine 4, da die Verbrennungskraftmaschine 5 mit dem noch zur Verfügung stehenden Moment das System beschleunigt.

Die unterbrochene senkrechte sechste Linie 18 beschreibt den Zeitpunkt des Gang-Auslegens in dem ersten Teilgetriebe 6 zum Schutz der elektrischen Maschine.

In dem in Fig. 1 dargestellten Diagramm ist auf der Abszisse die Zeit t und auf der Ordinate die Drehzahl n der elektrischen Maschine 4 aufgetragen. Die in durchgezogener Linienführung dargestellte Kennlinie zeigt somit das Verhalten der Drehzahl n der elektrischen Maschine 4 über die Zeit t.

Fig. 1 dient der Veranschaulichung eines nutzbaren ersten Drehzahlbereichs A und eines potentiell nutzbaren zweiten Drehzahlbereichs B einer elektrischen Maschine 4 in einem Kraftfahrzeugantriebsstrang, unter der Annahme, dass die elektrische Maschine im Fall eines Radabrisses (Fahrbahn-Reibwert µ_{Fahrbahn}=0) über eine noch angekoppelte Verbrennungskraftmaschine 5 weiter beschleunigt wird.

In dem Diagramm sind weiterhin zwei waagrechte, durchgezogene Linien, nämlich eine erste Linie 1 und eine zweite Linie 2, eingezeichnet. Die erste Linie 1 kennzeichnet eine maximale Drehzahl nₘₐₓ der elektrischen Maschine 4, die nicht überschritten werden darf. Die zweite Linie 2 kennzeichnet eine Obergrenze des nutzbaren Bereichs unter Berücksichtigung eines Puffer-Drehzahlbereichs.

Zur maximalen Drehzahl nₘₐₓ der elektrischen Maschine 4 muss, wie bereits einleitend beschreiben, ein Puffer-Drehzahlbereich gehalten werden. Dieser Puffer-Drehzahlbereich basiert auf dem maximal möglichen Raddrehzahlgradienten n_{Rad} und dem Zeitintervall Δt, das für eine Erkennung und Maßnahmenergreifung zum Schutz der elektrischen Maschine 4 vor einer Überdrehzahl notwendig ist. Der Zusammenhang zwischen dem Raddrehzahlgradienten n_{Rad} und dem Zeitintervall Δt ist in Fig. 1 durch die eingezeichneten Dreiecke dargestellt.

Der nutzbare erste Drehzahlbereich A liegt zwischen der Abszisse und der zweiten Linie 2. Der potentiell nutzbare zweite Drehzahlbereich B liegt zwischen der Abszisse und der ersten Linie 1.

Eine Auslegung der elektrischen Maschine 4, genauer deren Abkopplung bzw. Ankopplung an den Kraftfahrzeugantriebsstrang, gemäß Fig.1 hat zur Folge, dass die elektrische Maschine 4 robuster ausgeführt werden muss und somit einen größeren Luftspalt zwischen deren Rotor und deren Stator aufweisen muss, was wiederum zu einer Reduktion der Effizienz der elektrischen Maschine 4 führt.

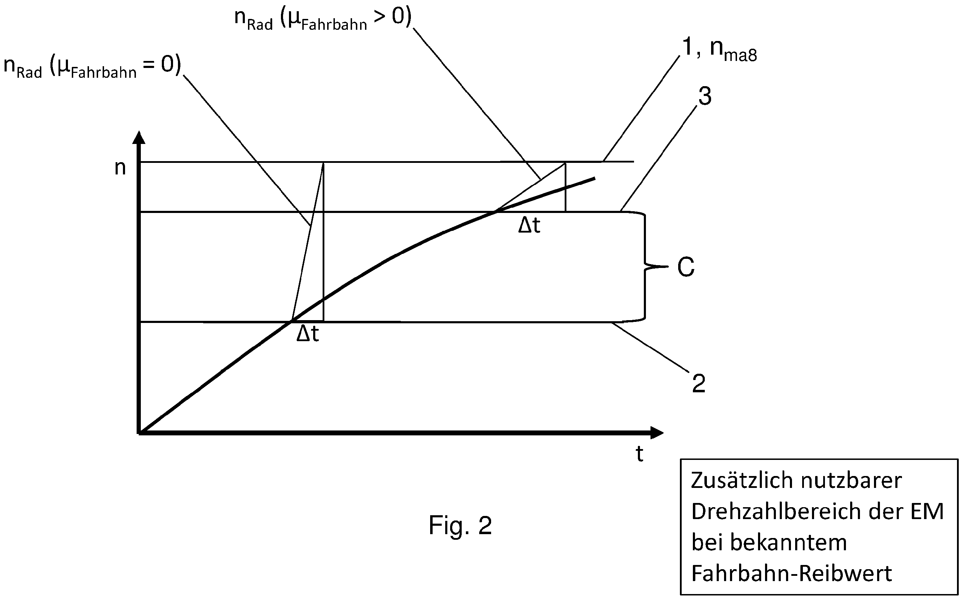

Kombiniert man die Auslegung für den anzunehmenden Grenzfall mit dem Fahrbahn-Reibwert µ_{Fahrbahn} sowie der vorherrschenden Last der zweiten Momentenquelle, nämlich der Verbrennungskraftmaschine 5, der letztendlich den Gradienten bestimmt, mit dem die elektrische Maschine 4 im Falle eines Radabrisses beschleunigt wird, kann der Drehzahl-Puffer zum Schutz der elektrischen Maschine 4 um einen dritten Drehzahlbereich C verringert werden, in dem sichergestellt werden kann, dass die elektrische Maschine 4 bei dem aktuell vorherrschenden Raddrehzahlgardienten n_{Rad} noch abgekoppelt werden kann (Fig. 2).

Fig. 2 dient der Veranschaulichung dieses dritten Drehzahlbereichs C, der zusätzlich nutzbar wird, wenn von der Annahme µ_{Fahrbahn}=0 im Falle eines Radabrisses abgewichen werden kann, sofern ein Fahrbahn-Reibwert µ_{Fahrbahn} bekannt ist.

Aufgrund dieser Kenntnis des Fahrbahn-Reibwerts µ_{Fahrbahn} kann die elektrische Maschine 4 freier dimensioniert werden, was einen verringerten Luftspalt zwischen Stator und Rotor der elektrischen Maschine 4 und somit eine effizienzoptimierte elektrische Maschine 4 zur Folge hat.

Um den Fahrbahn-Reibwert µ_{Fahrbahn} und den damit maximal möglichen Raddrehzahlgradienten n_{Rad} der elektrischen Maschine 4 zu schätzen, müssen einige Fahrzeug-Parameter permanent zur Verfügung stehen. Dies ist zum einen die dynamische Achslast der angetriebenen Achse, sowie das aktuell antreibende Radmoment.

Die Berechnung des aktuell antreibenden Radmomentes erfolgt im Getriebesteuergerät und basiert auf den vorherrschenden Kupplungsmomenten und den gegenwärtig eingelegten Übersetzungen im zugehörigen Teilgetriebe 6, 7, sowie dem aktuell von der elektrischen Maschine 4 geleiferten Drehmoment multipliziert mit deren Übersetzung.

Zur Berechnung oder Schätzung der aktuell vorherrschenden Achslasten wird im zuständigen Steuergerät permanent ein dynamisches Fahrzeug-Längsdynamikmodell berechnet, welches die aktuellen Achslasten schätzt. Die zur Berechnung der Achslasten benötigte Fahrzeugmasse wird ebenfalls während jedem Anfahrvorgang über das antreibende Radmoment und die gemessene Fahrzeugbeschleunigung ermittelt. Dies ist nur möglich, da im Anfahrvorgang die Kupplung das radmomentbestimmende Element im Antriebsstrang ist und das resultierende Radmoment im Getriebesteuergerät exakt bekannt ist. Der eventuelle Anteil der elektrischen Maschine 4 im Anfahrvorgang kann ebenfalls als weitgehend exakt angesehen werden.

Jetzt wird permanent mit Hilfe des antreibenden Radmomentes und der ermittelten dynamischen Achslast ein Reibwert berechnet. Dieser Reibwert kann als Reibwertbedarf des Kraftfahrzeugs angesehen werden.

Tritt jetzt ein Radabriss auf, welcher sich als sich vergrößernder Mikro-Schlupf der antreibenden Achse des Kraftfahrzeugs gegenüber der nicht angetriebenen Achse des Kraftfahrzeugs auszeichnet, wird der Bedarfsreibwert in dieser Situation eingefroren. Da der Reibwert jetzt nicht mehr nur den Bedarf des Kraftfahrzeugs repräsentiert, sondern tatsächlich Radschlupf aufgebaut wird, kann dieser Reibwert als geschätzter Fahrbahn-Reibwert µ_{Fahrbahn} herangezogen werden.

Mit Hilfe dieses geschätzten Fahrbahn-Reibwerts µ_{Fahrbahn} kann jetzt der Drehzahl-Puffer zur Zerstörungsgrenze (nₘₐₓ) der elektrischen Maschine 4 verringert werden. Da der Fahrbahn-Reibwert µ_{Fahrbahn} allerdings nur als Schätzung vorliegt wird nicht direkt der ermittelte Fahrbahn-Reibwert µ_{Fahrbahn} zur Berechnung herangezogen, sondern eine zusätzliche Sicherheitsschwelle mit aufaddiert, welche je nach ermitteltem Fahrbahn-Reibwert µ_{Fahrbahn} auch dynamisch gewählt wird.

Ebenfalls wird in selbigen Algorithmus noch die Last des Verbrennungsmotors 5 mitberücksichtigt. Liegt beispielsweise eine bereits hohe Drehzahl der elektrischen Maschine 4 vor, aber kein entsprechendes weiter antreibendes Drehmoment der Verbrennungskraftmaschine 5, wird der Drehzahl-Puffer kleiner gewählt, als wenn die Verbrennungskraftmaschine 5 noch volles Drehmoment liefert. Dies führt zu einer weiteren Verbesserung der Verfügbarkeit der elektrischen Maschine 4.

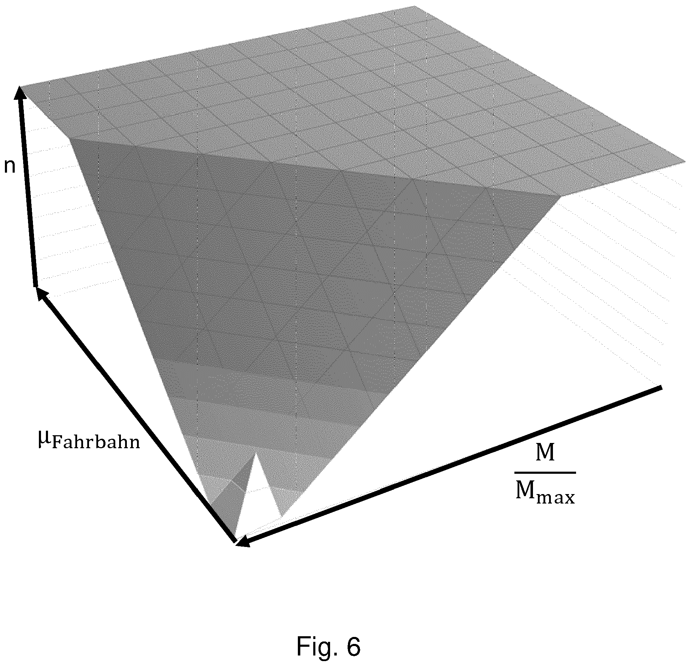

Fig.6 zeigt ein qualitatives Diagramm der Abkoppel-Drehzahl bezogen auf den geschätzten Fahrbahn-Reibwert µ_{Fahrbahn} und die vorherrschende Last M/Mmax an der Verbrennungskraftmaschine 5. Aufgetragen ist auf der Abszisse die vorherrschende Last im Antriebsstrang M/Mₘₐₓ, auf der Ordinate der ermittelte Fahrbahn-Reibwert µ_{Fahrbahn} und auf der Applikatenachse die resultierende Abkoppeldrehzahn n. Bei steigender Last M/Mₘₐₓ wird die Abkoppeldrehzahl n bei geringem Fahrbahn-Reibwert µ_{Fahrbahn} entsprechend reduziert.

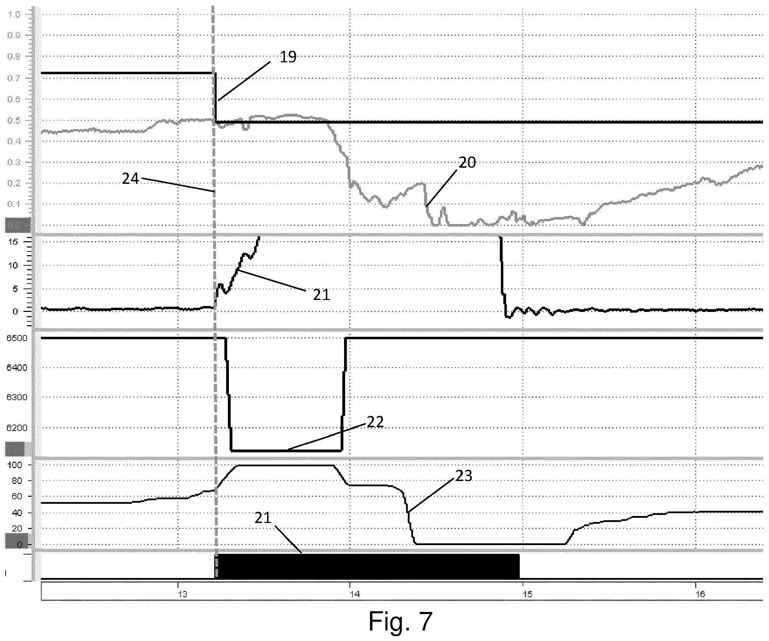

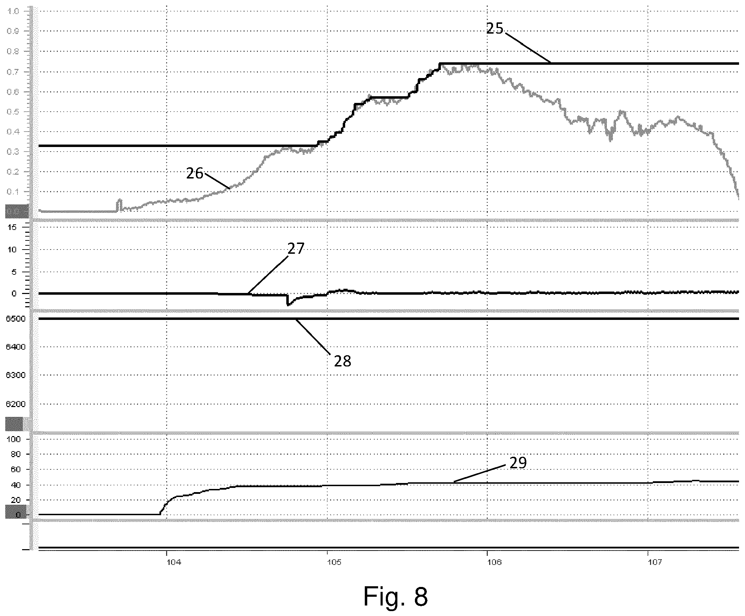

Fig. 7 zeigt das entsprechende Setzen und Halten des ermittelten Fahrbahn-Reibwerts µ_{Fahrbahn} anhand eines Messausschnitts. Die unterbrochene senkrechte siebte Linie 24 beschreibt den Zeitpunkt der Detektion des Radschlupfs. Der ausgegebene Fahrbahn-Reibwert wird zu diesem Zeitpunkt, nämlich zum Zeitpunkt der Detektion des Radschlupfs, auf den aktuell berechneten Bedarfsreibwert, dargestellt durch einen zweiten Graphen 20, reduziert und dort gehalten, bis ein höherer Bedarfsreibwert ohne Schlupf detektiert wird (Fig. 8). Bei gleichzeitig steigender Last, dargestellt durch einen fünften Graphen 23, wird auf Grund des geringen, ausgegebenen Fahrbahn-Reibwertes, dargestellt durch einen ersten Graphen 19, die Abkoppeldrehzahl, dargestellt durch einen vierten Graphen 22, der elektrischen Maschine 4 abgesenkt.

In Fig. 8 wird die Schlupfgrenze, dargestellt durch einen achten Graphen 27, zur Radabrisserkennung bei steigender Last, dargestellt durch einen zehnten Graphen 29, nicht überschritten. Der ausgegebene Fahrbahn-Reibwert, dargestellt durch einen sechsten Graphen 25, wird mittels Schleppzeiger dem Bedarfsreibwert, dargestellt durch einen siebten Graphen 26, angeglichen. Eine Anpassung der Abkoppeldrehzahl, dargestellt durch einen neunten Graphen 28, ist in dieser Situation nicht notwendig.

Ebenso kann das beschriebene Verfahren in Fahrzeugen mit schlupfbasiertem, nicht permanentem Allradantrieb verwendet werden, da zur Zuschaltung des Allradantriebs ebenfalls Schlupf zwischen primär antreibender und sekundär antreibender Achse notwendig ist und somit ebenfalls der Fahrbahn-Reibwert µ_{Fahrbahn} detektiert werden kann.

### Bezugszeichenliste

- n: Drehzahl
- nₘₐₓ: Maximale Drehzahl
- n_{Rad}: Maximal möglicher Raddrehzahlgradient
- t: Zeit
- Δt: Zeitintervall
- M: Drehmoment
- Mmax: Maximales Drehmoment
- µ_{Fahrbahn}: Fahrbahn-Reibwert

- 1: Erste Linie
- 2: Zweite Linie
- 3: Dritte Linie
- 4: Elektrische Maschine
- 5: Verbrennungskraftmaschine
- 6: Erstes Teilgetriebe
- 7: Zweites Teilgetriebe
- 8: Doppelkupplung
- 9: Kupplung
- 10: Hauptgetriebe
- 11: Getriebe
- 12: Erste Kennlinie
- 13: Zweite Kennlinie
- 14: Vierte Linie
- 15: Fünfte Linie
- 16: Dritte Kennlinie
- 17: Vierte Kennlinie
- 18: Sechste Linie
- 19: Erster Graph
- 20: Zweiter Graph
- 21: Dritter Graph
- 22: Vierter Graph
- 23: Fünfter Graph
- 24: Siebte Linie
- 25: Sechster Graph
- 26: Siebter Graph
- 27: Achter Graph
- 28: Neunter Graph
- 29: Zehnter Graph

- A: Erster Drehzahlbereich
- B: Zweiter Drehzahlbereich
- C: Dritter Drehzahlbereich
- D: Drehzahldifferenz

## Patentansprüche

1. Verfahren zum Schutz vor einer Überdrehzahl einer elektrischen Maschine (4) in einem Hybridkraftfahrzeugantriebsstrang mit zumindest einer zumindest teilweise über die elektrische Maschine (4) und einer Verbrennungskraftmaschine (5) antreibbaren Achse umfassend die folgenden Schritte:
- Schätzung eines Kraftfahrzeuggewichts während einem Anfahrvorgang,
- Laufende Berechnung einer dynamischen Achslast der angetriebenen Achse, eines antreibenden Radmoments und eines Bedarfsreibwerts,
- Detektion eines Radabrisses mittels einer Detektion eines Mikro-Schlupfs zwischen einer antreibenden und einer nicht angetriebenen Achse,
- Schätzung eines aktuellen Fahrbahn-Reibwerts µ_{Fahrbahn} basierend auf dem bei Radabriss berechneten antreibenden Radmoment und der bei Radabriss berechneten dynamischen Achslast der angetriebenen Achse,
- Halten des geschätzten Fahrbahn-Reibwerts µ_{Fahrbahn} bis der Radabriss nicht mehr detektiert wird und gleichzeitige
- Ermittlung einer maximalen Drehzahl nₘₐₓ der elektrischen Maschine (4), bei der diese vom Antriebsstrang antriebswirksam abgekoppelt wird, basierend auf dem ermittelten Fahrbahn-Reibwert µ_{Fahrbahn} und der gegenwärtigen Last der Verbrennungskraftmaschine (5).

## Claims

1. Method for protecting against an overspeed of an electric machine (4) in a hybrid motor vehicle drivetrain having at least one axle able to be driven at least partially by the electric machine (4) and an internal combustion engine (5), comprising the following steps:
- estimating a motor vehicle weight during a start-up procedure,
- continually calculating a dynamic axle load of the driven axle, a driving wheel torque and a required friction coefficient,
- detecting wheel slip by way of detecting microslip between a driving and a non-driven axle,
- estimating a current roadway friction coefficient µ_{roadway} based on the driving wheel torque calculated during the wheel slip and the dynamic axle load of the driven axle calculated during the wheel slip,
- keeping the estimated roadway friction coefficient µ_{roadway} until the wheel slip is no longer detected and at the same time
- ascertaining a maximum speed nₘₐₓ of the electric machine (4) at which this is actively decoupled from the drivetrain in terms of drive, based on the ascertained roadway friction coefficient µ_{roadway} and the current load of the internal combustion engine (5) .

## Revendications

1. Procédé de protection contre une survitesse d'une machine électrique (4) dans une chaîne cinématique de véhicule automobile hybride, comprenant au moins un essieu pouvant être entraîné au moins partiellement par la machine électrique (4) et un moteur à combustion interne (5), comprenant les étapes suivantes consistant à :
- estimer un poids de véhicule automobile pendant un processus de démarrage,
- calculer en continu une charge par essieu dynamique de l'essieu entraîné, un couple sur roue d'entraînement et un coefficient de friction nécessaire,
- détecter un décrochage de roue au moyen d'une détection d'un microglissement entre un essieu d'entraînement et un essieu sans entraînement,
- estimer un coefficient de friction de chaussée µ_{Fahrbahn} actuel sur la base du couple sur roue d'entraînement calculé en cas de décrochage de roue et de la charge par essieu dynamique calculée en cas de décrochage de roue de l'essieu entraîné,
- maintenir le coefficient de friction de chaussée µ_{Fahrbahn} estimé jusqu'à ce que le décrochage de roue ne soit plus détecté, et en même temps
- déterminer une vitesse de rotation maximale nₘₐₓ de la machine électrique (4) à laquelle celle-ci est découplée de la chaîne cinématique pour l'entraînement, sur la base du coefficient de friction de chaussée µ_{Fahrbahn} déterminé et de la charge présente du moteur à combustion interne (5).
